# EUROPEAN PATENT APPLICATION

(11) **EP 4 707 794 A1**
(43) Date of publication of application: **11.03.2026**
(21) Application number: 25198289.8
(22) Date of filing: 26.08.2025
(51) Int. Cl.: G01N 29/04, G01N 29/22, G01N 29/265, G01N 29/28

(54) **ULTRASONIC INSPECTING AIRCRAFT ENGINE COMPONENT**

(30) Priority: 26.08.2024 US 202418815399
(71) Applicant: RTX Corporation, Farmington, CT 06032 (US)
(72) Inventor: SMITH, Kevin D., Riviera Beach, 33404 (US); RAULERSON, David A., Palm Beach Garden, 33410 (US); FREIBERG, Douglas P., South Glastonbury, 06073 (US)
(74) Representative: Dehns

(57) **Abstract**

An inspection method is provided during which an acoustic coupling media (64) is directed into a cavity (60) of an engine assembly (58). The engine assembly (58) includes a first engine component (44) and a second engine component (22). The cavity (60) is formed by and extends between the first engine component (44) and the second engine component (22). An inspection device (28) is arranged with the engine assembly (58). The inspection device (28) includes an ultrasonic transducer (38). A first characteristic of the second engine component (22) is determined using the inspection device (28). The determining of the first characteristic includes: generating an ultrasonic signal (34) using the ultrasonic transducer (38); and directing the ultrasonic signal (34) from the inspection device (28), sequentially through the first engine component (44) and the acoustic coupling media (64), into the second engine component (22).

## Description

### BACKGROUND OF THE INVENTION

### 1. Technical Field

This invention relates generally to inspection and, more particularly, to non-destructive inspection for internal defects.

### 2. Background Information

Various systems and methods are known in the art for inspecting a component for internal defects. While these known inspection systems and methods have various benefits, there is still room in the art for improvement.

### SUMMARY OF THE INVENTION

According to an aspect of the present invention, an inspection method is provided during which an acoustic coupling media is directed into a cavity of an engine assembly. The engine assembly includes a first engine component and a second engine component. The cavity is formed by and extends between the first engine component and the second engine component. An inspection device is arranged with the engine assembly. The inspection device includes an ultrasonic transducer. A first characteristic of the second engine component is determined using the inspection device. The determining of the first characteristic includes: generating an ultrasonic signal using the ultrasonic transducer; and directing the ultrasonic signal from the inspection device, sequentially through the first engine component and the acoustic coupling media, into the second engine component.

According to another aspect of the present invention, another inspection method is provided during which an acoustic coupling media is directed into a cavity of an engine rotating assembly. The engine rotating assembly includes a shaft and a bladed rotor with a rotor disk. The cavity extends radially between and to the shaft and the rotor disk. An inspection device is arranged within a bore of the shaft axially aligned with the rotor disk. The inspection device includes an ultrasonic transducer. A first characteristic of the rotor disk is determined using the inspection device. The determining of the first characteristic includes: generating an ultrasonic signal using the ultrasonic transducer; and directing the ultrasonic signal from the inspection device, sequentially through the shaft and the acoustic coupling media, into the rotor disk.

According to still another aspect of the present invention, another inspection method is provided during which an acoustic coupling media is directed into a cavity of an engine rotating assembly. The engine rotating assembly includes a shaft and a bladed rotor with a rotor disk. The cavity extends radially between and to the shaft and the rotor disk. An inspection device is arranged within a bore of the shaft axially aligned with the rotor disk. The inspection device includes an ultrasonic transducer. Presence of a defect internal to the rotor disk is determined using the inspection device. The determining of the presence of the defect includes: generating an ultrasonic signal using the ultrasonic transducer; and directing the ultrasonic signal from the inspection device, sequentially through the shaft and the acoustic coupling media, into the rotor disk.

The following optional features may be applied to any of the above aspects.

A reflection of the ultrasonic signal may be directed out of the second engine component, sequentially through the acoustic coupling media and the first engine component, to the inspection device. The determining of the first characteristic further may include detecting a parameter of the reflection of the ultrasonic signal using the ultrasonic transducer.

The determining of the first characteristic may also include processing data indicative of the parameter to determine the first characteristic.

The first characteristic may be determined to detect presence of a defect internal to the second engine component.

The inspection method may also include: changing a relative arrangement between the engine assembly and the inspection device from a first arrangement to a second arrangement, wherein the first characteristic is determined for the first arrangement; and determining a second characteristic of the second engine component for the second arrangement using the inspection device. The determining of the second characteristic may include: generating a second ultrasonic signal using the ultrasonic transducer; and directing the second ultrasonic signal from the inspection device, sequentially through the first engine component and the acoustic coupling media, into the second engine component.

The engine assembly may be an engine rotating assembly rotatable about an axis.

The inspection method may also include: changing a relative circumferential arrangement between the engine rotating assembly and the inspection device about the axis from a first arrangement to a second arrangement, wherein the first characteristic is determined for the first arrangement; and determining a second characteristic of the second engine component for the second arrangement using the inspection device. The determining of the second characteristic may include: generating a second ultrasonic signal using the ultrasonic transducer; and directing the second ultrasonic signal from the inspection device, sequentially through the first engine component and the acoustic coupling media, into the second engine component.

The inspection method may also include: changing a relative axial arrangement between the engine rotating assembly and the inspection device along the axis from a first arrangement to a second arrangement, wherein the first characteristic is determined for the first arrangement; and determining a second characteristic of the second engine component for the second arrangement using the inspection device. The determining of the second characteristic may include: generating a second ultrasonic signal using the ultrasonic transducer; and directing the second ultrasonic signal from the inspection device, sequentially through the first engine component and the acoustic coupling media, into the second engine component.

The acoustic coupling media may be a liquid.

The acoustic coupling media may be or otherwise include water.

The acoustic coupling media may be directed into the cavity such that the cavity is partially filled with the acoustic coupling media during the determining of the first characteristic.

The acoustic coupling media may be directed into the cavity such that the cavity is completely filled with the acoustic coupling media during the determining of the first characteristic.

The arranging of the inspection device may include inserting the inspection device into a bore of the first engine component and abutting the inspection device against the first engine component.

The inspection device may also include an ultrasonic wedge disposed between the first engine component and the ultrasonic transducer.

The second engine component may be a rotor disk of a turbine engine.

The first engine component may be a shaft coupled to and rotatable with the rotor disk.

The cavity may circumscribe the first engine component. The second engine component may circumscribe the cavity with the cavity radially between the first engine component and the second engine component.

The inspection method may also include: draining the acoustic coupling media out from the cavity and the engine assembly; and preparing an engine for operation. The engine may include the engine assembly.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for ultrasonic inspecting a component of an aircraft engine.
FIGS. 2-4 are schematic illustrations of various ultrasonic inspection device arrangements.
FIG. 5 is a flow diagram of a method for inspecting an engine component.
FIG. 6 is a schematic cross-sectional illustration of an engine assembly with the ultrasonic inspection device, where a cavity of the engine assembly is partially filled with an acoustic coupling media.
FIG. 7 is a partial schematic sectional illustration of the engine assembly with the ultrasonic inspection device.
FIG. 8 is a schematic cross-sectional illustration of the engine assembly with the ultrasonic inspection device, where the cavity of the engine assembly is completely filled with the acoustic coupling media.
FIG. 9 is a partial schematic sectional illustration of a gas turbine engine which may include the engine assembly.

### DETAILED DESCRIPTION

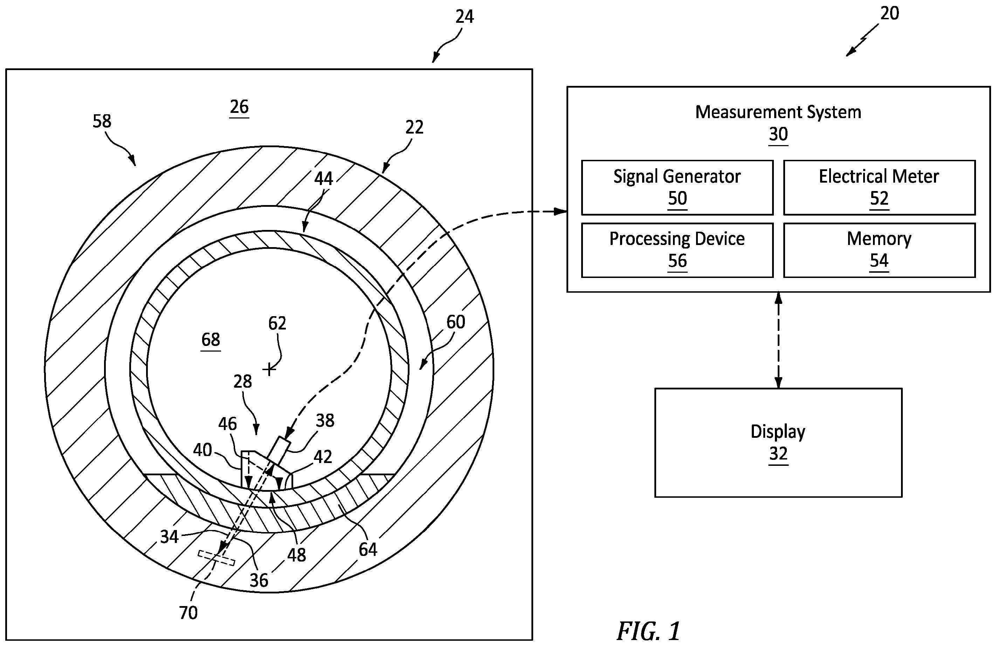

FIG. 1 illustrates an ultrasonic inspection system 20 for non-destructive inspecting a specimen engine component 22 of an engine 24 for an aircraft. The aircraft may be an airplane, a helicopter, a drone (e.g., an unmanned aerial vehicle (UAV)) or any other manned or unmanned aerial vehicle or system. The aircraft engine 24 may be configured as, or otherwise included as part of, a propulsion system for the aircraft. The aircraft engine 24, for example, may be a turbofan engine, a turbojet engine, a turboprop engine, a turboshaft engine, or any other type of gas turbine engine configured to generate thrust and/or drive rotation of a ducted or open propulsor rotor that generates thrust. The aircraft engine 24 may alternatively be configured as, or otherwise included as part of, a power generation system for the aircraft. The aircraft engine 24, for example, may be an auxiliary power unit (APU) or any other type of gas turbine engine configured to mechanically power operation of an electrical generator. The present invention, however, is not limited to such exemplary aircraft engines. The inspection systems and methods of the present invention, for example, may also be used for inspecting components of other types of internal combustion engines.

The inspection system 20 is configured to facilitate inspection of the specimen engine component 22 while that specimen engine component 22 remains installed with the aircraft engine 24 and, for example, while the aircraft engine 24 remains substantially or completely assembled. The specimen engine component 22 of FIG. 1, for example, is disposed within an interior 26 (e.g., an enclosed volume, an encased volume, etc.) of the aircraft engine 24. The inspection of the specimen engine component 22 may thereby be performed with a relatively short engine downtime and/or a relatively minimal expense. The inspection system 20, of course, may also be used for inspecting the specimen engine component 22 where the aircraft engine 24 is partially disassembled into one or more sub-assemblies, and the specimen engine component 22 is installed in and is part of one of the sub-assemblies.

The specimen engine component 22 may be any inspectable (e.g., metal) component within the aircraft engine 24. However, for ease of description, the specimen engine component 22 may be described below as a rotor disk of a bladed rotor within a gas turbine engine, and the aircraft engine 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present invention, however, is not limited to such exemplary specimen engine component configurations. The specimen engine component 22, for example, may alternatively be configured as a hub, a shaft or another rotating component within the aircraft engine 24. Moreover, while the specimen engine component 22 is generally described herein as a rotating engine component, it is contemplated the specimen engine component 22 may alternatively be a stationary engine component within the aircraft engine 24. The specimen engine component 22, for example, may be an engine case, a bearing support structure, etc.

The inspection system 20 is configured to use ultrasound for the inspection of the specimen engine component 22. The inspection system 20 of FIG. 1, for example, includes an ultrasonic inspection device 28, a measurement system 30 and a display 32. Examples of the display 32 include, but are not limited to, a screen, a monitor and/or a touch screen.

The ultrasonic inspection device 28 is configured to generate an ultrasonic signal 34. The ultrasonic inspection device 28 is also configured to sense a reflection of the ultrasonic signal 34 - an ultrasonic reflection signal 36. The ultrasonic inspection device 28 of FIG. 1, for example, includes at least (or only) one ultrasonic transducer 38 and an ultrasonic wedge 40 (or an ultrasonic horn). The ultrasonic transducer 38 of FIG. 1 is configured as an ultrasonic transceiver which both generates the ultrasonic signal 34 and senses the reflection signal 36. This ultrasonic transducer 38 is mounted to the ultrasonic wedge 40. The ultrasonic wedge 40 is configured to abut against and engage (e.g., contact) a surface 42 of an intermediate engine component 44. Briefly, the intermediate engine component 44 of FIG. 1 is a component of the aircraft engine 24 which obstructs direct access by the ultrasonic inspection device 28 to the specimen engine component 22 within the engine interior 26. The ultrasonic wedge 40 is tailored to facilitate transmission of the ultrasonic signal 34 into the intermediate engine component 44 at a select angle relative to intermediate component surface 42. The ultrasonic wedge 40 may also include one or more media channels 46 fluidly coupled to a media source. These media channels 46 extend through the ultrasonic wedge 40 and are configured to direct a first acoustic coupling media (e.g., an ultrasonic coupling media) received from the media source to the interface 48 between the ultrasonic wedge 40 and the intermediate component surface 42. This first acoustic coupling media may facilitate an uninterrupted acoustic coupling between (a) the ultrasonic wedge 40 and its mounted ultrasonic transducer 38 and (b) the intermediate engine component 44. The first acoustic coupling media may be an ultrasonic coupling liquid such as water, a glycerin solution or the like. Alternatively, the first acoustic coupling media may be an ultrasonic gel.

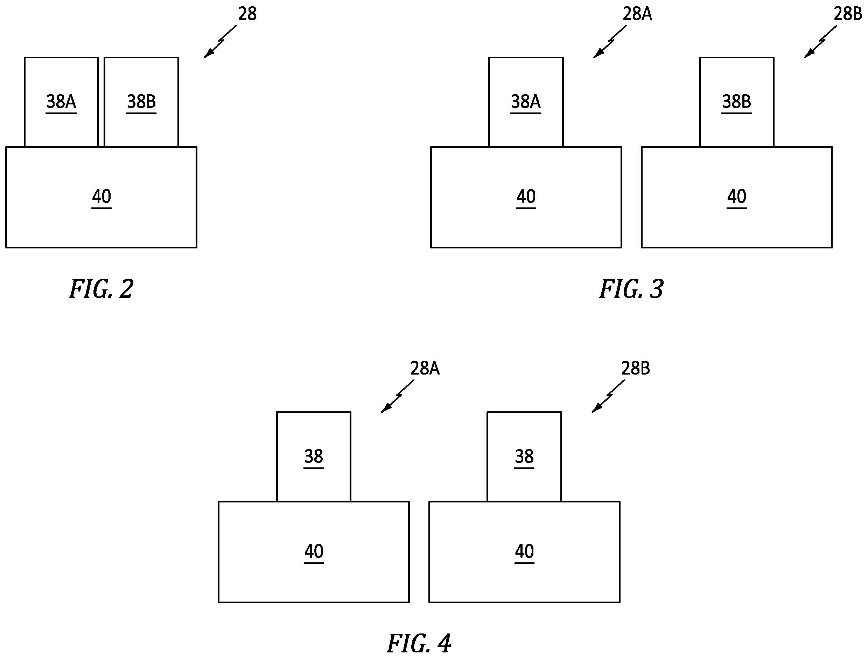

For ease of description, the inspection system 20 of FIG. 1 may be described below with its single ultrasonic inspection device 28, where that ultrasonic inspection device 28 includes its single ultrasonic transceiver as the ultrasonic transducer 38. The present invention, however, is not limited to such an exemplary arrangement. For example, referring to FIG. 2, the ultrasonic inspection device 28 may alternatively include at least (or only) two ultrasonic transducers 38A and 38B (generally referred to as "38"). The first ultrasonic transducer 38A may be configured as an ultrasonic transmitter that generates the ultrasonic signal 34 (see FIG. 1). The second ultrasonic transducer 38B may be configured as an ultrasonic sensor that senses the reflection of the ultrasonic signal 34 (see FIG. 1). In another example, referring to FIG. 3, the inspection system 20 may include a plurality of the ultrasonic inspection devices 28A and 28B (generally referred to as "28"). The first ultrasonic inspection device 28A may be configured with an ultrasonic transmitter as its ultrasonic transducer 38A. The second ultrasonic inspection device 28B may be configured with an ultrasonic sensor as its ultrasonic transducer 38B. In still another example, referring to FIG. 4, each of the multiple ultrasonic inspection devices 28A and 28B may be configured with its own ultrasonic transceiver.

Referring FIG. 1, the measurement system 30 is configured in signal communication (e.g., hardwired and/or wirelessly coupled) with the ultrasonic inspection device 28 and its ultrasonic transducer 38 as well as the display 32. The measurement system 30 may be implemented with a combination of hardware and software. The hardware may include a signal generator 50 (e.g., an oscillating power source), an electrical meter 52, a memory 54 and at least one processing device 56, which processing device 56 may include one or more single-core and/or multi-core processors. The hardware may also or alternatively include analog and/or digital circuitry other than that described above.

The signal generator 50 is in signal communication with the processing device 56 such that operation of the signal generator 50 is controlled by the processing device 56. The signal generator 50 is also in signal communication with the ultrasonic inspection device 28 and its ultrasonic transducer 38; e.g., the ultrasonic transceiver or the ultrasonic transmitter. This signal generator 50 is configured to energize the ultrasonic transducer 38 with an actuator voltage such that the ultrasonic transducer 38 generates its ultrasonic signal 34 for transmission into the intermediate engine component 44.

The electrical meter 52 is in signal communication with the processing device 56. The electrical meter 52 is also in signal communication with the ultrasonic inspection device 28 and its ultrasonic transducer 38; e.g., the ultrasonic transceiver or the ultrasonic receiver. This electrical meter 52 is configured to measure a sensor voltage or current generated by the ultrasonic transducer 38 upon sensing the reflection signal 36.

The memory 54 is configured to store software (e.g., program instructions) for execution by the processing device 56, which software execution may control and/or facilitate performance of one or more operations such as those described below. The memory 54 may be a non-transitory computer readable medium. For example, the memory 54 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

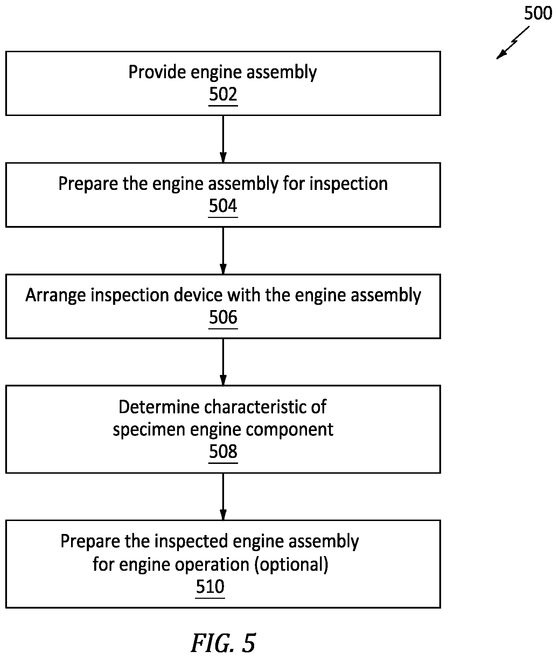

FIG. 5 is a flow diagram of a method 500 for inspecting the specimen engine component 22. For ease of description, the inspection method 500 is described below with reference to the inspection system 20 of FIG. 1. The specimen engine component 22 is also described below as being installed with the aircraft engine 24 and disposed within the engine interior 26, where the aircraft engine 24 is fully or substantially assembled. The inspection method 500 of the present invention, however, may alternatively be performed with other inspection systems (e.g., with the arrangements of FIGS. 2-4, etc.) and/or while the aircraft engine 24 is partially disassembled into one or more sub-assemblies.

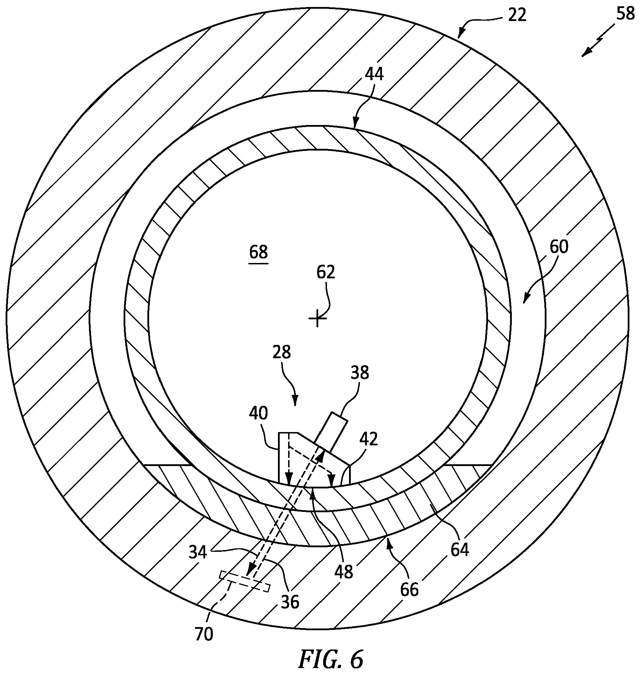

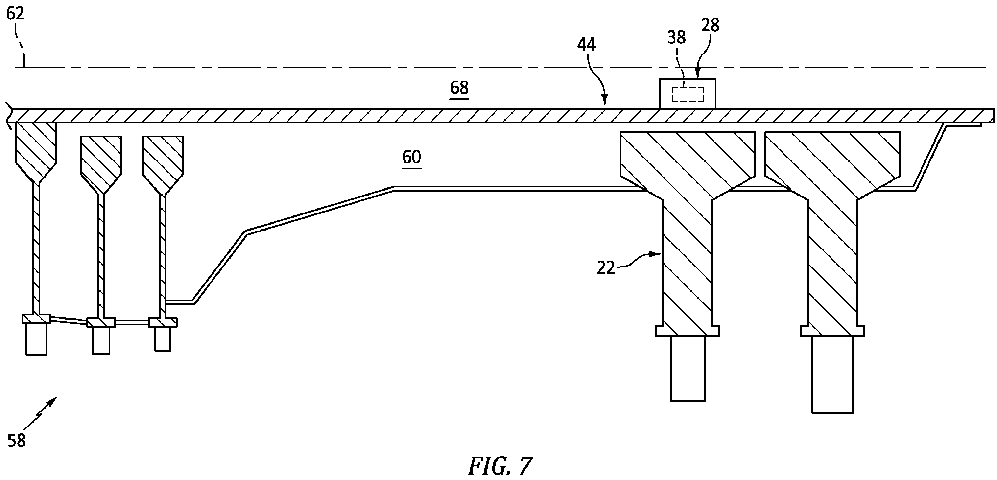

In step 502, referring to FIGS. 6 and 7, an assembly 58 of the aircraft engine is provided. This engine assembly 58 is an operational part of and may remain installed within the aircraft engine 24 (or a sub-assembly of the aircraft engine 24) during the inspection method 500 (see FIG. 1). The engine assembly 58 of FIGS. 6 and 7 includes the specimen engine component 22, the intermediate engine component 44 and an internal cavity 60. For ease of description, the engine assembly 58 is described below as a rotating assembly of the aircraft engine 24. The specimen engine component 22 is described below as the rotor disk. The intermediate engine component 44 is described below as an engine shaft (e.g., a tie shaft), where the engine shaft (the intermediate engine component 44) is coupled to and rotatable with the rotor disk (the specimen engine component 22) about an engine axis 62. With the arrangement of FIGS. 6 and 7, the specimen engine component 22 is located radially outboard of, axially overlaps and circumscribes the intermediate engine component 44. The assembly cavity 60 is located radially between and extends axially along the specimen engine component 22 and the intermediate engine component 44. The assembly cavity 60 also circumscribes the intermediate engine component 44. The intermediate engine component 44 may thereby at least partially form a radial inner peripheral boundary of the assembly cavity 60. The specimen engine component 22 may at least partially form a radial outer peripheral boundary of the assembly cavity 60. The assembly cavity 60 is a completely or substantially fluid tight cavity internal to the engine assembly 58. The assembly cavity 60 of FIG. 6 is configured as an annular cavity around the engine axis 62.

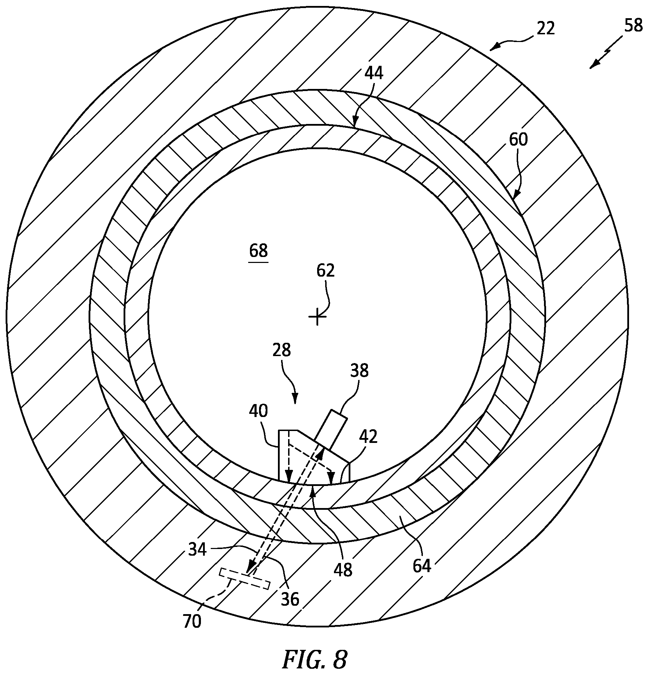

In step 504, the engine assembly 58 is prepared for inspection. A second acoustic coupling media 64 (e.g., an ultrasonic coupling media), for example, is directed into the assembly cavity 60 to provide an acoustic coupling between the intermediate engine component 44 and the specimen engine component 22 at least (or only) at an inspection location. The second acoustic coupling media 64, for example, may be directed into the assembly cavity 60 to partially fill the assembly cavity 60 with the second acoustic coupling media 64. While an entirety of the assembly cavity 60 is partially filled with the second acoustic coupling media 64 in FIG. 6, a select region 66 (e.g., an arcuate segment) of the assembly cavity 60 at least aligned with the inspection location is completely filled with the second acoustic coupling media 64 such that the second acoustic coupling media 64 fully contacts the intermediate engine component 44 and the specimen engine component 22 within the cavity region 66. The second acoustic coupling media 64 may thereby provide an acoustic path (e.g., a bridge) radially between the intermediate engine component 44 and the specimen engine component 22 at the inspection location. Of course, referring to FIG. 8, it is contemplated the second acoustic coupling media 64 may alternatively be directed into the assembly cavity 60 to completely fill the entirety (or substantially the entirety) of the assembly cavity 60.

Where the assembly cavity 60 of FIG. 6 (or FIG. 8) is a completely fluid tight cavity, the second acoustic coupling media 64 may flow into the assembly cavity 60 until a specified acoustic coupling media level is reached. The flow of the second acoustic coupling media 64 into the assembly cavity 60 may then be stopped. However, where the assembly cavity 60 of FIG. 6 (or FIG. 8) is a substantially fluid tight cavity with one or more (e.g., minor) leakage paths out of the assembly cavity 60 (e.g., through seal assemblies, mechanical connections, etc.), the flow of the second acoustic coupling media 64 into the assembly cavity 60 may continue even after reaching the specified acoustic coupling media level. For example, once the specified acoustic coupling media level is reached, the flow of the second acoustic coupling media 64 into the assembly cavity 60 may be reduced and regulated such that a continued (e.g., continuous or intermittent) flow of the second acoustic coupling media 64 into the assembly cavity 60 is substantially equal to leakage of the second acoustic coupling media 64 out of the assembly cavity 60. The specified acoustic coupling media level may thereby be maintained by providing a (e.g., slight) regulated flow of the second acoustic coupling media 64 into the assembly cavity 60.

The second acoustic coupling media 64 may be an ultrasonic coupling liquid such as water, a glycerin solution or the like. Alternatively, the second acoustic coupling media 64 may be a relatively low viscosity ultrasonic gel.

In some embodiments, prior to directing the second acoustic coupling media 64 into the assembly cavity 60, one or more components of the aircraft engine 24 (or the engine sub-assembly) may first need to be removed from the aircraft engine 24 (or the engine sub-assembly). For example, where another engine component (e.g., a low speed shaft) projects through a bore 68 of the intermediate engine component 44 (the engine shaft), that engine component may be removed / disassembled from the aircraft engine 24 (or the engine sub-assembly) to provide access for arrangement of the ultrasonic inspection device 28 as described below. However, even where the additional engine component is removed from the aircraft engine 24 (or the engine sub-assembly), the engine assembly 58 may remain within (e.g., installed with) the aircraft engine 24 (or the engine sub-assembly), for example, within the engine interior 26 (see FIG. 1).

In step 506, the ultrasonic inspection device 28 is arranged with the engine assembly 58. The ultrasonic inspection device 28 of FIG. 6, for example, is inserted into the bore 68 of the intermediate engine component 44. Within the bore 68 of the intermediate engine component 44, the ultrasonic inspection device 28 and its ultrasonic wedge 40 are aligned with the inspection location and abutted against the intermediate engine component 44 and its intermediate component surface 42. The first acoustic coupling media may also be directed to the interface 48 between the ultrasonic wedge 40 and the intermediate component surface 42. This first acoustic coupling media may be the same as or different than the second acoustic coupling media 64.

In step 508, a characteristic of the specimen engine component 22 is determined using the ultrasonic inspection device 28. The processing device 56, for example, may signal the signal generator 50 to energize the ultrasonic transducer 38 to generate the ultrasonic signal 34. This ultrasonic transducer 38 may then direct the ultrasonic signal 34 through the ultrasonic wedge 40 and into the engine assembly 58. More particularly, from the ultrasonic inspection device 28 and its ultrasonic wedge 40, the ultrasonic signal 34 may be transmitted sequentially through the intermediate engine component 44, the second acoustic coupling media 64 within the assembly cavity 60 and into the specimen engine component 22.

Where the specimen engine component 22 includes one or more internal defects 70, at least a portion of the ultrasonic signal 34 may reflect internally within the specimen engine component 22 against the internal defect(s) 70 back towards the ultrasonic inspection device 28. Herein, the term "defect" may describe a physical anomaly present within an engine component which may negatively affect a useful life of that engine component and/or performance of that engine component. Examples of the internal defect(s) 70 include, but are not limited to, cracks, voids, corrosion, density variations, areas of poor solidification (e.g., sintering) and/or the like. By contrast, where the specimen engine component 22 does not include any internal defects 70, the ultrasonic signal 34 may travel through the specimen engine component 22 (e.g., uninterrupted) until being reflected by a surface of the specimen engine component 22 and/or an interface between the specimen engine component 22 and still another engine component.

From the specimen engine component 22, the reflection signal 36 (whether reflected by the internal defect(s) 70, a surface of the specimen engine component 22, an interface between the specimen engine component 22 and still another engine component, and/or otherwise) is transmitted sequentially through the second acoustic coupling media 64 within the assembly cavity 60, the intermediate engine component 44 and into the ultrasonic inspection device 28. Within the ultrasonic inspection device 28, the reflection signal 36 is transmitted through the ultrasonic wedge 40 to the ultrasonic transducer 38. The ultrasonic transducer 38 senses the reflection signal 36 and the electrical meter 52 measures one or more parameters of the sensed reflection signal to provide a feedback signal to the processing device 56 indicative of the one or more parameters of the reflection signal 36.

The processing device 56 processes data from the feedback signal to determine a characteristic of the specimen engine component 22. For example, the processing device 56 may determine a transmission period spanning from when the ultrasonic signal 34 is transmitted by the ultrasonic transducer 38 to when the reflection signal 36 is sensed by the ultrasonic transducer 38. By comparing this measured transmission period to an expected transmission period, the processing device 56 may determine if the ultrasonic signal 34 was reflected by any anomalies within the specimen engine component 22 (e.g., an internal defect) prior to reaching another reflection feature; e.g., a surface of the specimen engine component 22, an interface between the specimen engine component 22 and still another engine component, and/or otherwise. In addition or alternatively, the reflection of the ultrasonic signal 34 may also change an amplitude of the signal providing the reflection signal 36 with a different amplitude than the original ultrasonic signal 34. By comparing the data from the feedback signal to threshold data, the processing device 56 may determine if the specimen engine component 22 includes (or is likely to include) any internal defect(s) 70. Conversely, the processing device 56 may determine if the specimen engine component 22 is free (or is likely to be free) of any internal defect(s) 70.

When the step 508 identifies presence of no internal defects 70 in material of the specimen engine component 22, information indicative of such may be presented on the display 32. This information may simply identify the presence of no internal defects 70. The information may also or alternatively indicate the inspected specimen engine component 22 meets / is within a component specification (e.g., a design specification) for that specimen engine component 22. The aircraft engine 24 may then be identified as being ready for continued operation assuming, for example, no other regular scheduled maintenance tasks and/or inspections need to be performed. Similarly, when the step 508 identifies the presence of internal defect(s) 70, information indicative of such may be presented on the display 32. This information may simply identify the presence of the internal defect(s) 70. The information may also or alternatively indicate the inspected specimen engine component 22 does not meet / is outside of the component specification for that specimen engine component 22. Inspection personnel may then take appropriate next steps to further inspect the specimen engine component 22 and/or initiate a process for repairing the specimen engine component 22 or replacing the specimen engine component 22. While the inspection method 500 is described above identifying whether or not the inspected specimen engine component 22 includes any internal defect(s) 70, this inspection method 500 may also (or alternatively) be extended to determine one or more other physical characteristics about the inspected specimen engine component 22.

**In** step 510, the engine assembly 58 may be prepared for (e.g., continued) engine operation where, for example, no internal defects 70 in the specimen engine component 22 are identified. For example, the ultrasonic inspection device 28 is removed from the bore 68 of the intermediate engine component 44. The second acoustic coupling media 64 is (e.g., completely) removed from the assembly cavity 60 and, more generally, from the engine assembly 58 and the aircraft engine 24 as a whole. The second acoustic coupling media 64, for example, may be drained out from the assembly cavity 60. In another example, the second acoustic coupling media 64 may be suctioned out of the assembly cavity 60 using a vacuum. Following the removal of the second acoustic coupling media 64, any component(s) removed from the aircraft engine 24 may be reassembled with the aircraft engine 24 to provide a complete aircraft engine. Note, this complete, operational aircraft engine 24 includes the engine assembly 58 and its engine components 22 and 44.

The inspection method 500 is described above relative to inspection of the specimen engine component 22 at a single inspection location for ease of description. Steps of the inspection method 500, however, may be repeated to inspect multiple locations along the specimen engine component 22. For example, the engine assembly 58 may be incrementally rotated about the engine axis 62 to facilitate the inspection of multiple different locations circumferentially around the specimen engine component 22. Note, by positioning the ultrasonic inspection device 28 at a vertical bottom (e.g., relative to gravity) of the bore 68 in the intermediate engine component 44, the second acoustic coupling media 64 may remain in position as the engine assembly 58 is rotated about the engine axis 62. In addition or alternatively, the ultrasonic inspection device 28 may be moved (e.g., translated) axially along the engine axis 62 to facilitate the inspection of multiple different locations axially along the specimen engine component 22. By providing such relative circumferential and/or axial movement between the specimen engine component 22 and the ultrasonic inspection device 28, multiple locations along the specimen engine component 22 may be inspected and mapped for the determination of the characteristic of the specimen engine component 22; e.g., identifying presence of any internal defects 70 in the specimen engine component 22. Note, while the relative circumferential movement between the specimen engine component 22 and the ultrasonic inspection device 28 is described above by rotating the engine assembly 58, the ultrasonic inspection device 28 may also or alternatively be rotated about the engine axis 62 within the bore 68 of the intermediate engine component 44. Moreover, while the relative axial movement between the specimen engine component 22 and the ultrasonic inspection device 28 is described above by axially moving the ultrasonic inspection device 28, the engine assembly 58 and its specimen engine component 22 may also or alternatively be moved (e.g., translated) axially along the engine axis 62.

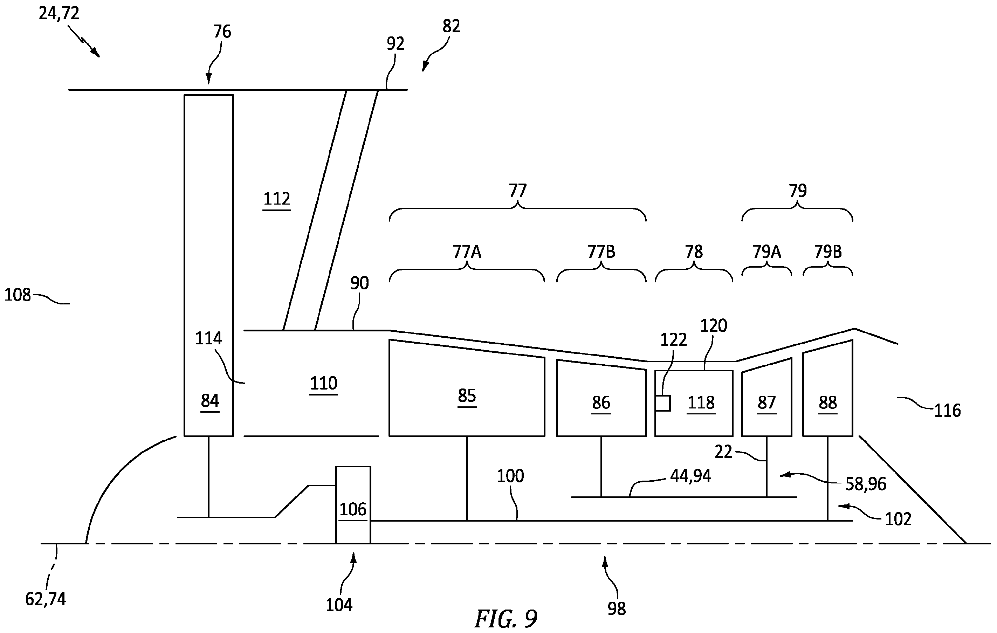

FIG. 9 illustrates the aircraft engine 24 as a gas turbine engine 72 such as a turbofan engine. This turbine engine 72 extends axially along an axis 74 (e.g., the engine axis 62) between a forward, upstream end of the turbine engine 72 and an aft, downstream end of the turbine engine 72. Briefly, the axis 74 may be a centerline axis of the turbine engine 72 and/or one or more of its members. The axis 74 may also or alternatively be a rotational axis for one or more members of the turbine engine 72. The turbine engine 72 of FIG. 9 includes a propulsor section 76 (e.g., a fan section), a compressor section 77, a combustor section 78 and a turbine section 79. The compressor section 77 includes a low pressure compressor (LPC) section 77A and a high pressure compressor (HPC) section 77B. The turbine section 79 includes a high pressure turbine (HPT) section 79A and a low pressure turbine (LPT) section 79B.

The propulsor section 76, the LPC section 77A, the HPC section 77B, the combustor section 78, the HPT section 79A and the LPT section 79B may be arranged sequentially along the axis 74 within a stationary engine housing 82. The propulsor section 76 includes a bladed propulsor rotor 84; e.g., a fan rotor. The LPC section 77A includes a bladed low pressure compressor (LPC) rotor 85. The HPC section 77B includes a bladed high pressure compressor (HPC) rotor 86. The HPT section 79A includes a bladed high pressure turbine (HPT) rotor 87. The LPT section 79B includes a bladed low pressure turbine (LPT) rotor 88. These engine rotors 84-88 are housed within the engine housing 82. The engine housing 82 of FIG. 9, for example, includes an inner housing structure 90 (e.g., a core case structure) and an outer housing structure 92 (e.g., a propulsor case structure). The inner housing structure 90 may house one or more of the engine sections 77A-79B and their engine rotors 85-88, including the engine assembly 58. The outer housing structure 92 may house at least the propulsor section 76 and its propulsor rotor 84.

The HPC rotor 86 is coupled to and rotatable with the HPT rotor 87. The HPC rotor 86 of FIG. 9, for example, is connected to the HPT rotor 87 through a high speed shaft 94. At least (or only) the HPC rotor 86, the HPT rotor 87 and the high speed shaft 94 collectively form a high speed rotating assembly 96; e.g., a high speed spool of a core 98 of the turbine engine 72. This high speed rotating assembly 96 of FIG. 9 and its members 86, 87 and 94 are rotatable about the axis 74. Here, the high speed rotating assembly 96 may be the engine assembly 58, the HPT rotor 87 may include the specimen engine component 22, and the high speed shaft 94 may be the intermediate engine component 44.

The LPC rotor 85 is coupled to and rotatable with the LPT rotor 88. The LPC rotor 85 of FIG. 9, for example, is connected to the LPT rotor 88 through a low speed shaft 100. At least (or only) the LPC rotor 85, the LPT rotor 88 and the low speed shaft 100 collectively form a low speed rotating assembly 102; e.g., a low speed spool of the engine core 98. This low speed rotating assembly 102 is further coupled to the propulsor rotor 84 through a drivetrain 104. This drivetrain 104 may be configured as a geared drivetrain, where a geartrain 106 (e.g., a transmission, a speed change device, an epicyclic geartrain, etc.) is disposed between and operatively couples the propulsor rotor 84 to the low speed rotating assembly 102 and its LPT rotor 88. With this arrangement, the propulsor rotor 84 may rotate at a different (e.g., slower) rotational velocity than the low speed rotating assembly 102 and its LPT rotor 88. However, the drivetrain 104 may alternatively be configured as a direct drive drivetrain, where the geartrain 106 is omitted. With such an arrangement, the propulsor rotor 84 rotates at a common (the same) rotational velocity as the low speed rotating assembly 102 and its LPT rotor 88. The low speed rotating assembly 102 of FIG. 9 and its members 85, 88 and 100 as well as the propulsor rotor 84 are rotatable about the axis 74.

During operation, ambient air from outside of the aircraft enters the turbine engine 72 through an airflow inlet 108. This air is directed across the propulsor section 76 and into a (e.g., annular) core flowpath 110 and a (e.g., annular) bypass flowpath 112. The core flowpath 110 of FIG. 9 extends sequentially through the LPC section 77A, the HPC section 77B, the combustor section 78, the HPT section 79A and the LPT section 79B from an airflow inlet 114 into the core flowpath 110 to a combustion products exhaust 116 out from the core flowpath 110 and the engine core 98. The air entering the core flowpath 110 may be referred to as "core air". The bypass flowpath 112 extends through a bypass duct, which bypasses (e.g., is disposed radially outboard of and extends along) the engine core 98. The air within the bypass flowpath 112 may be referred to as "bypass air".

The core air is compressed by the LPC rotor 85 and the HPC rotor 86 and is directed into a (e.g., annular) combustion chamber 118 of a (e.g., annular) combustor 120 in the combustor section 78. Fuel is injected into the combustion chamber 118 by one or more fuel injectors 122 and mixed with the compressed core air to provide a fuel-air mixture. This fuel-air mixture is ignited and combustion products thereof flow through and sequentially drive rotation of the HPT rotor 87 and the LPT rotor 88 about the axis 74. The rotation of the HPT rotor 87 and the LPT rotor 88 respectively drive rotation of the HPC rotor 86 and the LPC rotor 85 about the axis 74 and, thus, compression of the air received from the core inlet 114. The rotation of the LPT rotor 88 also drives rotation of the propulsor rotor 84. The rotation of the propulsor rotor 84 propels the bypass air through and out of the bypass flowpath 112. The propulsion of the bypass air may account for a majority of thrust generated by the turbine engine 72 of FIG. 9, e.g., more than seventy-five percent (75%) of engine thrust. The turbine engine of the present invention, however, is not limited to the foregoing exemplary thrust ratio.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An inspection method (500), comprising:
directing an acoustic coupling media (64) into a cavity (60) of an engine assembly (58), the engine assembly (58) including a first engine component (44) and a second engine component (22), and the cavity (60) formed by and extending between the first engine component (44) and the second engine component (22);
arranging an inspection device (28) with the engine assembly (58), the inspection device (28) comprising an ultrasonic transducer (38); and
determining a first characteristic of the second engine component (22) using the inspection device (28), the determining of the first characteristic comprising generating an ultrasonic signal (34) using the ultrasonic transducer (38), and directing the ultrasonic signal (34) from the inspection device (28), sequentially through the first engine component (44) and the acoustic coupling media (64), into the second engine component (22).

2. The inspection method (500) of claim 1, wherein
a reflection of the ultrasonic signal (34) is directed out of the second engine component (22), sequentially through the acoustic coupling media (64) and the first engine component (44), to the inspection device (28); and
the determining of the first characteristic further comprises detecting a parameter of the reflection of the ultrasonic signal (34) using the ultrasonic transducer (38).

3. The inspection method (500) of claim 1 or 2, wherein the determining of the first characteristic further comprises processing data indicative of the parameter to determine the first characteristic.

4. The inspection method (500) of any preceding claim, wherein the first characteristic is determined to detect presence of a defect internal to the second engine component (22).

5. The inspection method (500) of any preceding claim, further comprising:
changing a relative arrangement between the engine assembly (58) and the inspection device (28) from a first arrangement to a second arrangement, wherein the first characteristic is determined for the first arrangement; and
determining a second characteristic of the second engine component (22) for the second arrangement using the inspection device (28), the determining of the second characteristic comprising generating a second ultrasonic signal (34) using the ultrasonic transducer (38), and directing the second ultrasonic signal (34) from the inspection device (28), sequentially through the first engine component (44) and the acoustic coupling media (64), into the second engine component (22).

6. The inspection method (500) of any preceding claim, wherein the engine assembly (58) is an engine rotating assembly rotatable about an axis (74).

7. The inspection method (500) of claim 6, further comprising:
changing a relative circumferential arrangement between the engine rotating assembly (58) and the inspection device (28) about the axis (74) from a first arrangement to a second arrangement, wherein the first characteristic is determined for the first arrangement; and
determining a second characteristic of the second engine component (22) for the second arrangement using the inspection device (28), the determining of the second characteristic comprising generating a second ultrasonic signal (34) using the ultrasonic transducer (38), and directing the second ultrasonic signal (34) from the inspection device (28), sequentially through the first engine component (44) and the acoustic coupling media (64), into the second engine component (22).

8. The inspection method (500) of claim 6 or 7, further comprising:
changing a relative axial arrangement between the engine rotating assembly (58) and the inspection device (28) along the axis (74) from a or the first arrangement to a or the second arrangement, wherein the first characteristic is determined for the first arrangement; and
determining a second characteristic of the second engine component (22) for the second arrangement using the inspection device (28), the determining of the second characteristic comprising generating a second ultrasonic signal (34) using the ultrasonic transducer (38), and directing the second ultrasonic signal (34) from the inspection device, sequentially through the first engine component (44) and the acoustic coupling media (64), into the second engine component (22).

9. The inspection method (500) of any preceding claim, wherein:
the acoustic coupling media (64) is a liquid; and/or
the acoustic coupling media (64) comprises water.

10. The inspection method (500) of any preceding claim, wherein:
the acoustic coupling media (64) is directed into the cavity (60) such that the cavity (60) is partially filled with the acoustic coupling media (64) during the determining of the first characteristic; or
the acoustic coupling media (64) is directed into the cavity (60) such that the cavity (60) is completely filled with the acoustic coupling media (64) during the determining of the first characteristic.

11. The inspection method (500) of any preceding claim, wherein the arranging of the inspection device (28) comprises inserting the inspection device (28) into a bore (68) of the first engine component (44) and abutting the inspection device (28) against the first engine component (44).

12. The inspection method (500) of any preceding claim, wherein the inspection device (28) further comprises an ultrasonic wedge (40) disposed between the first engine component (44) and the ultrasonic transducer (38).

13. The inspection method (500) of any preceding claim, wherein the second engine component (22) is a rotor disk of a turbine engine (72), and wherein, optionally, the first engine component (44) is a shaft coupled to and rotatable with the rotor disk.

14. The inspection method (500) of any preceding claim, wherein:
the cavity (60) circumscribes the first engine component (44); and
the second engine component (22) circumscribes the cavity (60) with the cavity (60) radially between the first engine component (44) and the second engine component (22).

15. The inspection method (500) of any preceding claim, further comprising:
draining the acoustic coupling media (64) out from the cavity and the engine assembly (58); and
preparing an engine (24) for operation, the engine (24) comprising the engine assembly (58).
